# EUROPÄISCHE PATENTSCHRIFT

(11) **EP 1 719 600 B1**
(45) Veröffentlichungstag und Bekanntmachung des Hinweises auf die Patenterteilung: **13.01.2016**
(21) Anmeldenummer: 06007243.6
(22) Anmeldetag: 06.04.2006
(51) Int. Cl.: B29C 47/00, B29C 47/36, B29C 47/20, B29C 44/34, B29C 44/20, B29C 47/40, B29C 47/76, B29C 47/38

(54) **Verfahren zur Erzeugung einer Schaumkunststoff-Folie**
Method for making foam plastic film
Procédé pour la production de feuilles de mousse plastique

(30) Priorität: 04.05.2005 DE 102005020794
(43) Veröffentlichungstag der Anmeldung: 08.11.2006
(73) Patentinhaber: Coperion GmbH, 70469 Stuttgart (DE)
(72) Erfinder: Wohlfahrt-Laymann, Hendrik, 70569 Stuttgart (DE)
(74) Vertreter: Rau, Manfred

(56) Entgegenhaltungen:
- EP-A- 1 211 048
- EP-A- 1 371 469
- EP-A2- 0 376 671
- EP-A2- 0 445 847
- WO-A-2004/007172
- DE-A1- 19 708 986
- DE-U1- 20 320 505
- US-A- 5 882 558
- US-A- 6 005 013
- US-A1- 2003 042 645

## Beschreibung

Die Erfindung betrifft ein Verfahren zur Erzeugung einer Polykondensat-Schaum-Folie nach Anspruche 1.

Aus der EP 0 376 671 ist ein derartiges Verfahren nach dem Oberbegriff des Anspruchs 1 bekannt.

Aus der EP 1 211 048 A2 ist ein derartiges Verfahren bekannt, mit dem ungetrocknete Polykondensate nicht aufbereitet werden können.

Aus der US 5,882,558 A ist ein Verfahren und eine Vorrichtung zum Recycling von begastem Kunststoffmaterial, z. B. geschäumtem Polysterol, bekannt. Hierbei wird das zu recycelnde Kunststoffmaterial in einem Extruder aufgeschmolzen und entgast. Anschließend wird diese Kunststoffschmelze begast und granuliert. Zwischen dem Extruder der Granuliervorrichtung ist ein Mischer vorgesehen, der als statischer Mischer ausgebildet sein kann. Zwischen einer dem Extruder nachgeordneten Schmelzepumpe und dem Mischer wird der Kunststoffschmelze Gas zugeführt. Eine optimale Zuführung des Gases ist hiermit nicht möglich.

Aus der DE 197 08 986 A1 ist ein Verfahren bekannt, bei dem ein Ein-Wellen-Extruder verwendet wird, der eine Zuführung für ein Polymer aufweist. Dem Extruder ist eine erste, als Zahnradpumpe ausgebildete Pumpe nachgeordnet, der wiederum ein Statik-Mischer nachgeordnet ist. In den Statik-Mischer mündet eine Zuführung für Treibgas ein. Dem StatikMischer ist ein Extrusions-Werkzeug nachgeordnet. Im Extruder erfolgt ein Aufschmelzen des Polymers. Eine zufriedenstellende Herstellung einer Polykondensat-Schaum-Folie ist hiermit nicht möglich.

Eine ähnliche Anlage ist aus der EP 0 445 847 A2 bekannt.

Aus der DE 203 20 505 U1 ist es bekannt, in einem Extruder zum Herstellen von syntaktischen Kunststoffen eine Entgasung vorzunehmen.

Es ist weiterhin bekannt, Anlagen zur Durchführung eines Verfahrens zur Erzeugung einer Kunststoff-Schaum-Folie mit zwei Extrudern auszurüsten, wobei in einem Primärextruder der Kunststoff aufgeschmolzen und in diesen Stickstoff eingeblasen wird. In einem Sekundärextruder erfolgt ein Abkühlen des aufgeschmolzenen Kunststoffes unter gleichzeitigem Einmischen von Treibgas in die Kunststoff-Schmelze. Hierbei wird die Schmelze gekühlt. Diese Anlage ist außerordentlich aufwändig.

Es ist weiterhin bekannt, in nur einem Extruder den Kunststoff aufzuschmelzen und einen Druck aufzubauen, der über dem Dampfdruck des nach dem Druckaufbau zuzuführenden Treibmittels liegt. Anschließend erfolgt eine Abkühlung des Kunststoffschmelze-Treibmittel-Gemisches unter gleichzeitiger leichter Druckabsenkung, woran sich die Erzeugung einer Schaumkunststoff-Folie in einer entsprechenden Folien-Düse anschließt. Diese Anlage weist den Nachteil auf, dass nur bereits in ihrer endgültigen Konsistenz vorliegende Kunststoffe eingesetzt werden können.

Aus der US 2003/0042645 A1 ist eine Anlage zur Erzeugung einer Kunststofffolie bekannt, bei der in einen Zwei-Wellen-Extruder ein Kunststoff eingegeben und anschließend aufgeschmolzen wird. Es erfolgt eine Entgasung und anschließend eine Zugabe eines weiteren Kunststoffs, der mit dem ersten Kunststoff gemischt wird. Der Austrag der Schmelze erfolgt mittels einer Zahnrad-Pumpe, die mit entsprechend erhöhtem Druck einer Fölien-Düse zugeführt wird. Maßnahmen zur Erzeugung einer SchaumKunststoff-Folie sind nicht vorgesehen.

Aus der EP 1 371 469 A2 ist ein Verfahren zur Herstellung eines wärmeisolierten Leitungsrohres bekannt, bei dem ein Rohr von einer Trommel abgewickelt und in einer geeigneten Vorrichtung mit einer Folie zur Bildung eines Außenrohres umgeben wird. Zwischen dieses Außenrohr und das Innenrohr wird ein aufschäumbares Kunststoffgemisch eingegeben. Die Aufbereitung des Schaumkunststoffs erfolgt in der Weise, dass Luft, Pentan und Polyol einem Statik-Mischer zugeführt werden. Diese Vormischung wird in einem dynamischen Mischer mit Isocyanat gemischt. Dieses aufschäumbare bzw. aufschäumende und reagierende Gemisch wird mittels einer Spritzpistole zwischen das Innenrohr und das Außenrohr eingespritzt.

Der Erfindung liegt die Aufgabe zugrunde, ein Verfahren der allgemeinen Gattung zu schaffen, das bei einfachem Aufbau der verwendeten Anlage in einfacher Weise durchgeführt werden kann und insbesondere auch den Einsatz ungetrockneter Polykondensate ermöglicht.

Diese Aufgabe wird erfindungsgemäß durch die Merkmale im Kennzeichnungsteil des Anspruchs 1 gelöst. Einerseits wird bei der verwendeten Anlage nur ein Extruder eingesetzt, andererseits können aber auch noch einer intensiven Entgasung, beispielsweise Trocknung, bedürftige Polykondensate eingesetzt werden.

Auf dem gleichsinnig drehenden, dicht kämmenden Zwei-Wellen-Extruder erfolgt ein Aufschmelzen und eine Vakuumentgasung und eine besonders intensive Vermischung und damit feine Verteilung des Nukleierungsmittels im Polykondensat, so dass der Einsatz eines passiven Nukleierungsmittels, wie beispielsweise Kaolin, Kreide oder Talkum ausreichend ist. Es müssen keine aktiven Nukleierungsmittel eingesetzt werden, die erst durch entsprechende Temperatur und Scherung zerfallen und darüber eine entsprechend gute Verteilung erreichen, wie dies bei Einsatz von Ein-Wellen-Extrudern erforderlich ist. Der anschließende Druckaufbau erfolgt mittels einer Pumpe. Das Einmischen des Treibmittels erfolgt mittels eines relativ einfachen Statik-Mischers. In einer einzigen Verfahrensstufe, also relativ dicht hintereinander, wird die Schmelze einerseits Vakuum ausgesetzt und andererseits auf hohen Druck von 70 bis 300 bar gebracht. Das Einmischen des Treibmittels erfolgt in einem Statik-Mischer, weil es auf eine extrem feine Verteilung des Treibmittels in der Kunststoff-Schmelze nicht ankommt, da das Treibmittel sich an den freien Blasenkeimbildnern, also dem Nukleierungsmittel, anlagert.

Vorteilhafte Weiterbildungen ergeben sich aus den Unteransprüchen.

Ein Ausführungsbeispiel der Erfindung wird nachfolgend anhand der Zeichnung näher erläutert. Es zeigt
- Fig. 1: eine zur Durchführung des erfindungsgemäßen Verfahrens verwendete Anlage in schematischer Darstellung und
- Fig. 2: einen Querschnitt durch den Extruder der Anlage.

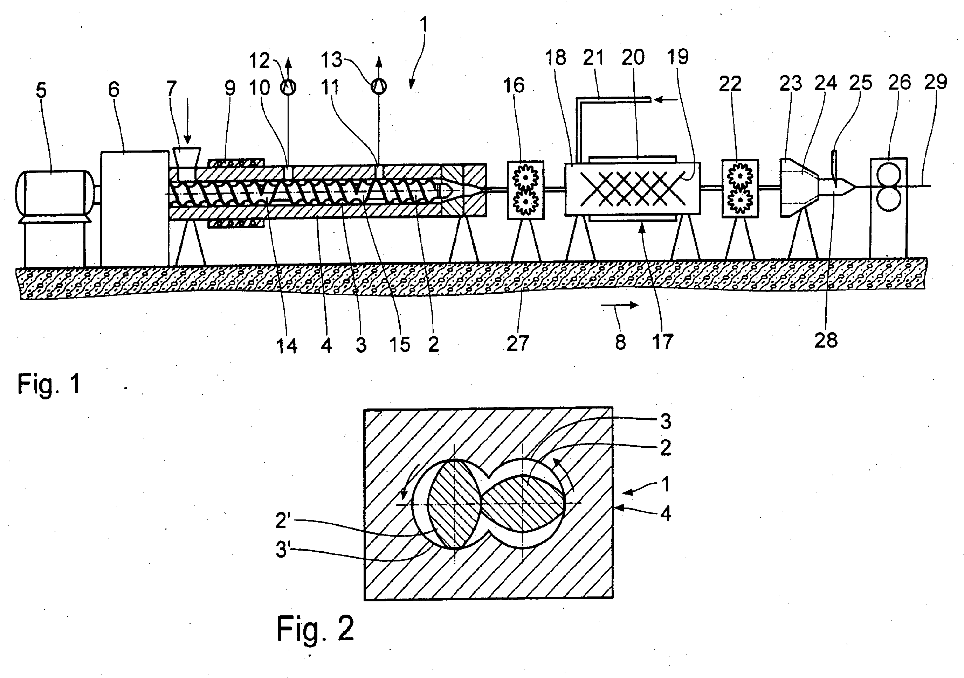

Die in der Zeichnung dargestellte Anlage weist einen Zwei-Wellen-Extruder 1 auf, der in seinem Grundaufbau in üblicher Weise ausgestaltet ist. Er weist zwei Schnecken 2, 2' auf. Diese sind in entsprechenden Bohrungen 3, 3' eines Gehäuses 4 angeordnet. Wie Fig. 2 erkennen lässt, sind die Schnecken 2, 2' dicht kämmend und gleichsinnig drehend ausgebildet. Der Antrieb der Schnecken 2, 2' erfolgt von einem Elektro-Motor 5 über ein Untersetzungs- und Verzweigungs-Getriebe 6, an dem auch das Gehäuse 4 angeflanscht ist. Benachbart zum Getriebe 6, also am stromaufwärtigen Ende des Extruders 1, mündet ein Zugabe-Trichter 7 in das Gehäuse 4 ein. In Förderrichtung 8 hinter dem Trichter 7 ist das Gehäuse 4 mit einer Heizung 9 versehen. Im Anschluss daran sind in Förderrichtung 8 hintereinander zwei aus dem Gehäuse 4 ausmündende Entgasungs-Öffnungen 10, 11 vorgesehen, die jeweils an eine Vakuum-Pumpe 12, 13 angeschlossen sind. In Förderrichtung 8 vor, also stromaufwärts jeder EntgasungsÖffnung 10 bzw. 11 sind an den Schnecken 2 Stau-Einrichtungen 14, 15 in Form entgegen der Förderrichtung 8 fördernder Schnecken-Abschnitte vorgesehen.

Der Extruder 1 mündet an seinem in Förderrichtung 8 stromabwärtigen Ende in eine Hochdruck-Zahnrad-Pumpe 16 ein, die wiederum an einen Statik-Mischer 17 angeschlossen ist. Dieser weist ein Gehäuse 18 auf, in dem ein üblicher Statik-Misch-Körper 19 angeordnet ist. Das Gehäuse 18 ist mit einer Temperier-Einrichtung 20 versehen. Mittels dieser ist, beispielsweise mittels Thermoöl, sowohl ein Heizen als auch ein Kühlen möglich. Am in Förderrichtung 8 stromaufwärtigen Ende des Statik-Mischers 17 mündet in diesen eine Treibgas-Zuführleitung 21 ein. Dem Statik-Mischer 17 ist wiederum in Förderrichtung 8 eine weitere Hochdruck-Zahnrad-Pumpe 22 nachgeordnet, an die eine Folien-Düse 23 angeschlossen ist. Diese Düse 23 ist üblicherweise als Ringdüse mit einem Kalibrierdorn 24 ausgebildet. Hieran schließt sich ein Folien-Längsschneid-Messer 25 an. In Förderrichtung 8 hinter dieser Düse 23 ist ein Kühl- und Kalibrier-Walzwerk 26 vorgesehen. Die beschriebenen Bauelemente sind auf einem ein- oder mehrteiligen Fundament 27 angeordnet.

Die Arbeitsweise ist wie folgt:
In den Trichter 7 wird Polykondensat, insbesondere Polyester (PET) oder Polykarbonat (PC) oder Polyamid (PA) oder Polymethylmethacrylat (PMMA) mit bereits fein verteiltem Nukleierungsmittel eingegeben. Die Zuführung kann also als Masterbatch oder auch einzeln erfolgen. Als Nukleierungsmittel kommt insbesondere Kaolin in Betracht. Es kommen aber auch Kreiden oder Talkum oder weitere bekannte Nukleierungsmittel in Betracht. Das Polykondensat und das Nukleierungsmittel wird mittels der Schnecken 2 durch das Gehäuse 4 in Förderrichtung 8 gefördert. Das Aufschmelzen erfolgt hierbei unter Wärmezufuhr mittels der Heizung 9. Während der Förderung erfolgt eine Feinstverteilung des Nukleierungsmittels im Kunststoff. Diese Feinstverteilung ergibt sich aus den besonders guten Mischeigenschaften des gleichsinnig drehenden, dicht kämmenden Zwei-Wellen-Extruders 1. Über die Entgasungs-Öffnungen 10, 11 wird die Polykondensat-Schmelze unter einem Druck von weniger als 5 hPa (5 mbar), also fast vollständigem Vakuum, entgast. Die Entgasung erfolgt bei einer Schmelzetemperatur von 280 bis 300°C. Durch die den Entgasungs-Öffnungen 10, 11 vorgeordneten Stau-Einrichtungen 14, 15 wird eine störungsfreie Entgasung ermöglicht.

Die vollständig entgaste Schmelze aus Polykondensat und feinstverteiltem Nukleierungsmittel wird nach Verlassen des Extruders 1 mittels der ersten Hochdruck-Zahnrad-Pumpe 16 mit einem Druck von 70 bis 300 hPa (70 bis 300 bar) in den Statik-Mischer 17 eingegeben, wobei an dessen stromaufwärtigem Ende Treibgas mit überkritischem Druck eingegeben wird. Das Treibgas und die Polykondensat-Schmelze werden im StatikMischer 17 intensiv gemischt. Da das Treibgas in überkritischem Zustand zugeführt wird, verhält es sich wie eine Flüssigkeit. Als Treibgas kommt insbesondere Stickstoff aber auch Kohlendioxid in Betracht. Die Temperatur des Gemischs aus Polykondensat und Stickstoff im Statik-Mischer 17 beträgt 300 bis 250 °C. Je nach Bedarf kann eine Kühlung oder Heizung der Schmelze mittels der Temperier-Einrichtung 20 erfolgen.

Die dem Statik-Mischer 17 nachgeordnete zweite Hochdruck-ZahnradPumpe 22 dient gleichsam als Rückhaltestufe, um den hohen Druck im Statik-Mischer 17 zu ermöglichen. Der Druckabfall im Statik-Mischer 17 kann aber auch so groß sein, dass der Einsatz einer solchen zweiten Hochdruck-Zahnrad-Pumpe 22 nicht notwendig ist. Entscheidend ist, dass die Schmelze der Folien-Düse 23 mit einem Druck leicht über Atmosphärendruck zugeführt wird, damit nach dem für das Durchströmen der Folien-Düse 23 notwendigen Druckgradienten am Austritt der Folien-Düse 23 Atmosphärendruck in der Schmelze herrscht. In der Folien-Düse 23 schäumt die Polykondensat-Schmelze aufgrund der Druckentlastung auf und wird als Folien-Schlauch 28 aus der Düse 23 ausgegeben. Die Temperatur des Folien-Schlauchs 28 am Austritt der Folien-Düse 23 beträgt 220 bis 250°C. Dieser Folien-Schlauch 28 wird mittels des Messers 25 längs zu einer Bahn aufgeschnitten. Die daraus entstehende ebene Folie 29 wird in dem Kühl- und Kalibrier-Walzwerk 26 kalibriert und abgekühlt und gleichzeitig abgezogen. Bei der Folie 29 handelt es sich um eine Schaum-stoff-Folie, also eine Folie 29 aus geschäumten Polykondensat, insbesondere PET, mit einer Dichte von etwa 0,3 kg/dm³ und einer Dicke von 0,6 bis 2,0 mm.

## Patentansprüche

1. Verfahren zur Erzeugung einer Polykondensat-Schaum-Folie unter Verwendung
- eines gleichsinnig drehenden, dicht kämmenden Zwei-WellenExtruders (1), der
-- eine Zuführung (7) für das Polykondensat aufweist,
- einer dem Extruder (1) nachgeordneten ersten Pumpe (16)
- eines der ersten Pumpe (16) nachgeordneten Mischers (17), wobei in den Mischer (17) eine Zuführung (21) für Treibgas einmündet,
- einer dem Mischer (17) nachgeordneten Folien-Düse (23),
- wobei das Polykondensat mit Nukleierungsmittel in die Zuführung (7) eingegeben wird, und
- wobei im Extruder (1) ein Aufschmelzen des Polykondensats und eine Verteilung des Nukleierungsmittels im Polykondensat erfolgt, wobei das Polykondensat mit bereits fein verteiltem Nukleierungsmittel in die Zuführung (7) eingegeben wird, wobei eine Feinstverteilung des Nukleierungsmittels im Polykondensat erfolgt,
**dadurch gekennzeichnet,**
- **dass** der Extruder (1) mindestens eine Vakuum-Entgasungs-Einrichtung (10-13) aufweist, dass der Mischer (17) einen Statik-Mischer (17) ist der mit einer Temperier-Einrichtung (20) versehen ist,
- **dass** der Folien-Düse (23) ein Folien-Längsschneid-Messer (25) nachgeordnet wird, und
- **dass** das Treibgas dem Statik-Mischer (17) in überkritischem Zustand zugeführt wird.

2. Verfahren nach Anspruch 1, **dadurch gekennzeichnet,**
**dass** ein Extruder (1) mit einer Heizung (9) zum Aufschmelzen des Polykondensats verwendet wird.

3. Verfahren nach Anspruch 1 oder 2, **dadurch gekennzeichnet,**
**dass** eine Entgasung der Polykondensat-Schmelze mittels der Vakuum-Entgasungs-Einrichtung mit einem Entgasungs-Druck von kleiner 5 hPa erfolgt.

4. Verfahren nach einem der Ansprüche 1 bis 3, **dadurch gekennzeichnet,**
**dass** mit der ersten Pumpe (16) ein Schmelze-Druck von 7 bis 30 MPa der Polykondensat-Schmelze erzeugt wird.

5. Verfahren nach einem der Ansprüche 1 bis 4, **dadurch gekennzeichnet,**
**dass** zwischen dem Statik-Mischer (17) und der Folien-Düse (23) eine zweite Pumpe (22) verwendet wird.

6. Verfahren nach einem der Ansprüche 1 bis 5, **dadurch gekennzeichnet,**
**dass** als erste Pumpe und/oder zweite Pumpe Zahnrad-Pumpen (16, 22) verwendet werden.

7. Verfahren nach einem der Ansprüche 1 bis 6, **dadurch gekennzeichnet,**
**dass** als Folien-Düse (23) eine Ring-Düse mit einem Kalibrierdorn (24) verwendet wird.

8. Verfahren nach einem der Ansprüche 1 bis 7, **dadurch gekennzeichnet,**
**dass** der Folien-Düse (23) ein Kühl- und Kalibrier-Walzwerk (26) nachgeordnet wird.

9. Verfahren nach einem der Ansprüche 1 bis 8, **dadurch gekennzeichnet,**
**dass** Polyester als Polykondensat eingesetzt wird.

10. Verfahren nach einem der Ansprüche 1 bis 9, **dadurch gekennzeichnet,**
**dass** die Entgasung der Polykondensat-Schmelze bei einer Schmelzetemperatur von 280 bis 300 °C erfolgt.

11. Verfahren nach einem der Ansprüche 1 bis 10, **dadurch gekennzeichnet,**
**dass** als Treibgas Stickstoff eingesetzt wird.

12. Verfahren nach Anspruch 11, **dadurch gekennzeichnet,**
**dass** die Temperatur des Gemischs aus Polykondensat und Stickstoff im Statik-Mischer (17) 300 bis 250 °C beträgt.

## Claims

1. Method for producing a polycondensate foam film using
- a co-rotating, closely intermeshing twin-screw extruder (1), which
-- comprises a supply (7) of polycondensate,
- a first pump (16) arranged downstream of the extruder (1)
- an agitator (17) arranged downstream of the first pump (16), wherein a supply (21) of propellant gas discharges into the agitator (17),
- a foil nozzle (23) arranged downstream of the agitator (17),
- wherein the polycondensate with nucleating agent is fed into the supply (7), and
- wherein in the extruder (1) a melting of the polycondensate and a distribution of the nucleating agent in the polycondensate is effected, wherein the polycondensate is supplied to the supply (7) with already fine dispersed nucleating agent, wherein a finest dispersion of the nucleating agent takes place in the polycondensate,
**characterized in that**
- the extruder (1) comprises at least one vacuum degassing unit (10-13),
- the agitator (17) is a static agitator (17) provided with a temperature control (20),
- a foil-slitting blade (25) is arranged downstream of the film nozzle (23), and
- the propellant gas is fed into the static agitator (17) when in the supercritical state.

2. Method according to Claim 1, **characterized in that** an extruder (1) with a heating device (9) is used for melting the polycondensate.

3. Method according to Claim 1 or 2, **characterized in that** degassing of the polycondensate melt is effected by means of the vacuum degassing unit with a degassing pressure of less than 5 hPa.

4. Method according to one of Claims 1 to 3, **characterized in that** a melting pressure of 7 to 30 MPa of the polycondensate melt is generated by means of the first pump (16).

5. Method according to one of Claims 1 to 4, **characterized in that** a second pump (22) is used between the static agitator (17) and the foil nozzle (23).

6. Method according to one of Claims 1 to 5, **characterized in that** toothed gear pumps (16, 22) are used as first and/or second pumps.

7. Method according to one of Claims 1 to 6, **characterized in that** a ring nozzle having a calibration mandrel (24) is used as a foil nozzle (23).

8. Method according to one of Claims 1 to 7, **characterized in that** a cooling- and calibration roller mill (26) is arranged downstream of the foil nozzle (23).

9. Method according to one of Claims 1 to 8, **characterized in that** polyester is used as polycondensate.

10. Method according to one of Claims 1 to 9, **characterized in that** degassing of the polycondensate melt is effected at a temperature of the melt between 280 and 300°C.

11. Method according to one of Claims 1 to 10, **characterized in that** nitrogen is used as a propellant gas.

12. Method according to Claim 11, **characterized in that** the temperature of the mixture of polycondensate and nitrogen in the static agitator (17) is 300 to 250°C.

## Revendications

1. Procédé servant à produire une feuille de mousse de polycondensat en utilisant
- une extrudeuse à deux arbres (1) tournant dans le même sens, s'engrenant étroitement, qui
- - présente une arrivée (7) pour le polycondensat,
- une première pompe (16) installée en aval de l'extrudeuse (1)
- un mélangeur (17) disposé en aval de la première pompe (16), sachant qu'une arrivée (21) pour du gaz propulseur débouche dans le mélangeur (17),
- une buse de feuille (23) installée en aval du mélangeur (17),
- sachant que le polycondensat est mélangé à un agent de nucléation dans l'arrivée (7) et
- sachant qu'une fusion du polycondensat et une dispersion de l'agent de nucléation dans le polycondensat se produisent dans l'extrudeuse (1),
sachant que le polycondensat est mélangé dans l'arrivée (7) à l'agent de nucléation déjà finement dispersé,
sachant qu'une dispersion fine de l'agent de nucléation se produit dans le polycondensat,
**caractérisé en ce**
- **que** l'extrudeuse (1) présente au moins un dispositif de dégazage sous vide (10 - 13),
- en ce que le mélangeur (17) est un mélangeur statique (17), qui est pourvu d'un dispositif de thermorégulation (20)
- en ce qu'un couteau de coupe longitudinale de feuille (25) est disposé en aval de la buse de feuille (23), et
- en ce que le gaz propulseur est amené au mélangeur statique (17) dans un état supercritique.

2. Procédé selon la revendication 1, **caractérisé en ce**
**qu'**une extrudeuse (1) comprenant un système de chauffage (9) est utilisée pour faire fondre le polycondensat.

3. Procédé selon la revendication 1 ou 2, **caractérisé en ce**
**qu'**un dégazage de la matière fondue de polycondensat est effectué au moyen du dispositif de dégazage sous vide à une pression de dégazage inférieure à 5 hPa.

4. Procédé selon l'une quelconque des revendications 1 à 3, **caractérisé en ce**
**qu'**une pression de matière fondue allant de 7 à 30 MPa de la matière fondue de polycondensat est générée avec la première pompe (16).

5. Procédé selon l'une quelconque des revendications 1 à 4, **caractérisé en ce**
**qu'**une deuxième pompe (22) est utilisée entre le mélangeur statique (17) et la buse de feuille (23).

6. Procédé selon l'une quelconque des revendications 1 à 5, **caractérisé en ce**
**que** des pompes à engrenages (16, 22) sont utilisées en tant que première pompe et/ou en tant que deuxième pompe.

7. Procédé selon l'une quelconque des revendications 1 à 6, **caractérisé en ce**
**qu'**une buse à bague pourvue d'un mandrin de calibrage (24) est utilisée en tant que buse de feuille (23).

8. Procédé selon l'une quelconque des revendications 1 à 7, **caractérisé en ce**
**qu'**un laminoir de refroidissement et de calibrage (26) est disposé en aval de la buse de feuille (23).

9. Procédé selon l'une quelconque des revendications 1 à 8, **caractérisé en ce**
**que** du polyester est utilisé en tant que polycondensat.

10. Procédé selon l'une quelconque des revendications 1 à 9, **caractérisé en ce**
**que** le dégazage de la matière fondue de polycondensat se produit à une température de matière fondue allant de 280 à 300 °C.

11. Procédé selon l'une quelconque des revendications 1 à 10, **caractérisé en ce**
**que** de l'azote est utilisé en tant que gaz propulseur.

12. Procédé selon la revendication 11, **caractérisé en ce**
**que** la température du mélange composé de polycondensat et d'azote dans le mélangeur statique (17) va de 300 à 250 °C.
